# EUROPEAN PATENT SPECIFICATION

(11) **EP 2 329 677 B1**
(45) Date of publication and mention of the grant of the patent: **23.05.2012**
(21) Application number: 09791552.4
(22) Date of filing: 15.08.2009
(51) Int. Cl.: H04W 74/08

(54) **PROVISION OF A SCHEDULED LEGACY PROTECTION FRAME**
BEREITSTELLUNG EINES EINGEPLANTEN LEGACY-SCHUTZRAHMENS
DISPOSITION D'UN CADRE DE PROTECTION EXISTANT PROGRAMMÉ

(30) Priority: 20.08.2008 US 90382 P; 10.08.2009 US 538691
(43) Date of publication of application: 08.06.2011
(73) Proprietor: QUALCOMM Incorporated, San Diego, California 92121-1714 (US)
(72) Inventor: WENTINK, Maarten, Menzo, San Diego CA 92121-1714 (US)
(74) Representative: Gates, Marie Christina Esther
(86) International application number: PCT/US2009/053964
(87) International publication number: WO 2010/021948

(56) References cited:
- EP-A- 1 662 708
- EP-A- 1 699 249
- US-A1- 2007 195 798
- WANRONG YU ET AL: "A High-Throughput MAC Protocol for Wireless Ad Hoc Networks" IEEE TRANSACTIONS ON WIRELESS COMMUNICATIONS, IEEE SERVICE CENTER, PISCATAWAY, NJ, US, vol. 7, no. 1, 1 January 2008 (2008-01-01), pages 135-145, XP011224627 ISSN: 1536-1276

## Description

### TECHNICAL FIELD

The present disclosure relates generally to wireless communication systems. More specifically, the present disclosure relates to systems and methods for providing a scheduled legacy protection frame for wireless devices.

### BACKGROUND

Wireless communication devices have become smaller and more powerful in order to meet consumer needs and to improve portability and convenience. Consumers have become dependent upon wireless communication devices such as cellular telephones, personal digital assistants (PDAs), laptop computers, and the like. Consumers have come to expect reliable service, expanded areas of coverage, and increased functionality. A wireless communication device may be referred to as a mobile station, a subscriber station, an access terminal, a remote station, a user terminal, a terminal, a subscriber unit, user equipment, *etc.*

A wireless communication system may provide communication for a number of cells, each of which may be serviced by a base station. A base station may be a fixed station that communicates with subscriber stations. A base station may alternatively be referred to as an access point or some other terminology.

A subscriber station may communicate with one or more base stations via transmissions on the uplink and the downlink. The uplink (or reverse link) refers to the communication link from the subscriber station to the base station, and the downlink (or forward link) refers to the communication link from the base station to the subscriber station. A wireless communication system may simultaneously support communication for multiple subscriber stations.

The resources of a wireless communication system (e.g., bandwidth and transmit power) may be shared among multiple mobile stations. A variety of multiple access techniques arc known, including code division multiple access (CDMA), time division multiple access (TDMA), frequency division multiple access (FDMA), orthogonal frequency division multiple access (OFDMA), single-carrier frequency division multiple access (SC-FDMA), and so forth.

Benefits may be realized by improved methods and apparatus related to the operation of wireless communication systems.

The document "A High-Throughput MAC Protocol for Wireless Ad Hoc Networks", IEEE TRANSACTIONS ON WIRELESS COMMUNICATIONS, Vol. 7, No. 1, January 2008, pages 135 to 145 by Wanrong Yu et al. discloses the Concurrent Transmission MAC (CTMAC) protocol, wherein a device refrains from sending its data packet for the duration of an Additional Control Gap during which control packets may be exchanged and concurrent transmissions may be scheduled, thereby avoiding collisions. A similar solution is disclosed in US 2007/0195798 A1.

It is therefore an object of the present invention to ensure backward compatibility with legacy devices by employing specific mechanisms to ensure that the legacy devices know when a device that is compliant with a newer version of the standard or that uses proprietary enhancements is using a wireless channel to avoid a collision.

The present invention meets this object by providing a method for informing a nearby device of an upcoming data transmission as well as a corresponding wireless device, apparatus and computer-program product according to claims 1 and 16 to 18.

### BRIEF DESCRIPTION OF THE DRAWINGS

Figure 1 illustrates a system for wireless communication that includes two long range (LR) devices, A and B, and two legacy devices, C and D;

Figure 2 illustrates transmission schemes involving an LR device A(LR), an LR device B(LR), and a legacy device C(legacy);

Figure 3 illustrates alternative transmission schemes involving an LR device A(LR), an LR device B(LR), and a legacy device C(legacy);

Figure 4 illustrates a flow diagram for a method for providing a scheduled legacy protection frame;

Figure 5 illustrates means-plus-function blocks corresponding to the method of Figure 4;

Figure 6 illustrates a flow diagram for an alternative method for providing a scheduled legacy protection frame;

Figure 7 illustrates means-plus-function blocks corresponding to the method of Figure 6; and

Figure 8 illustrates various components that may be utilized in a wireless device.

### DETAILED DESCRIPTION

A method for informing a nearby device of an upcoming long range (LR) data transmission is described. A scheduled time is obtained. A legacy protection frame is sent within a fixed time period of the scheduled time. The legacy protection frame can be decoded by the nearby device.

The legacy protection frame may include a clear-to-send (CTS) frame. A long range (LR) data transmission may be sent after the fixed time period. The legacy protection frame may be sent after a backoff period. The backoff period may be fixed.

The obtaining and the sending may be performed by an access point (AP). The AP may be an 802.11n device. The obtaining and the sending may also be performed by a subscriber station (STA). The STA may be an 802.11 In device. The nearby device may not be an 802.11 n device.

The legacy protection frame may set a network allocation vector (NAV). The CTS frame may set a network allocation vector (NAV). The legacy protection frame may cause the nearby device not to transmit for a period of time. The NAV may be longer than the fixed time period. The fixed time period may be longer than the time needed to transmit the legacy protection frame. The method may be executed by a pair of devices.

A wireless device configured to inform a nearby device of an upcoming long range (LR) data transmission is also described. The wireless device includes a processor and circuitry coupled to the processor. The circuitry is configured to obtain a scheduled time. The circuitry is also configured to send a legacy protection frame within a fixed time period. The legacy protection frame can be decoded by the nearby device.

An apparatus configured to inform a nearby device of an upcoming long range (LR) data transmission is also described. The apparatus includes means for obtaining a scheduled time. The apparatus also includes means for sending a legacy protection frame within a fixed time period. The legacy protection frame can be decoded by the nearby device.

A computer-program product for informing a nearby device of an upcoming long range (LR) data transmission is also described. The computer-program product may include a computer-readable medium having instructions thereon. The instructions include code for obtaining a scheduled time. The instructions also include code for sending a legacy protection frame within a fixed time period. The legacy protection frame can be decoded by the nearby device.

The Institute of Electronic and Electrical Engineers (IEEE) 802.11 Working Group aims to prepare format standards for wireless local area network (WLAN) computer communication. IEEE 802.11n is a proposed amendment to the IEEE 802.11-2007 wireless networking standard. IEEE 802.11n is intended to significantly improve network throughput over previous IEEE 802.11 standards. The techniques disclosed herein may be implemented in devices that are configured in accordance with IEEE 802.11 standards, including IEEE 802.11n.

Different wireless devices in a wireless communication system may be compliant with different standards or different variations of the same standard, such as the IEEE 802.11 standard, or they may support proprietary enhancements of a standard. When devices that are compliant with multiple versions of the IEEE 802.11 standard or that support proprietary enhancements are in the same WLAN, the devices that are compliant with older versions or that do not support the proprietary enhancements are considered to be legacy devices. To ensure backward compatibility with legacy devices, specific mechanisms may be employed to ensure that the legacy devices know when a device that is compliant with a newer version of the standard or that uses proprietary enhancements is using a wireless channel to avoid a collision. The present disclosure relates generally to preventing interference between the devices utilizing the newer 802.11 technologies and the legacy devices.

Under some circumstances, IEEE 802.11 devices may utilize a long-range physical layer (PHY) mode for long-range wireless communications. However, the long-range PHY mode may not be decodable for legacy devices. In this situation, it may be desirable to inform legacy devices that a long-range transmission is pending.

The present disclosure proposes to address this problem using scheduled legacy protection frames, which may include scheduled clear-to-send (CTS) frames. With scheduled CTS frames, both Long Range (LR) stations attempt to transmit a legacy CTS frame at a scheduled moment (preceded by a backoff) followed after a fixed time by a first LR transmission. The fixed time may be longer than the time needed to transmit a CTS frame (if not much longer), to allow for one or both of the CTS transmissions to be delayed due to a channel busy condition. The CTS frames clear the medium for a "protected" LR transmission opportunity (TXOP) on both sides, during which LR frames can be exchanged. The advantage is that the legacy protection occurs more or less simultaneously on both sides.

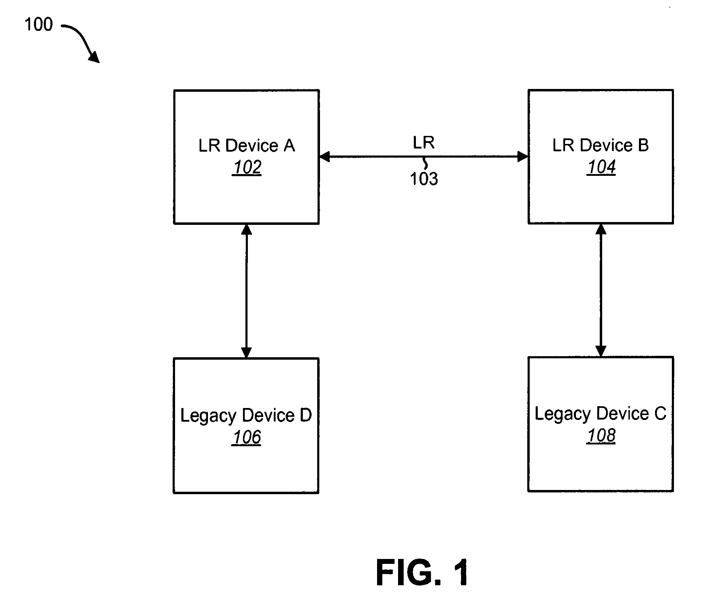

Figure 1 illustrates a system 100 for wireless communication that includes two long range (LR) devices 102, 104, and two legacy devices 106, 108. The LR device A 102 is in wireless electronic communication with a legacy device D 106 because LR device A 102 is within the communication range of legacy device D 106. The LR device A 102 is in long range wireless electronic communication with another LR device B 104. The LR device B 104 is in wireless electronic communication with a legacy device C 108 because LR device B 104 is within the communication range of legacy device C 108. Although not shown, the system 100 may include more than the two LR devices 102, 104 shown in Figure 1. Furthermore, although not shown, each of the LR devices 102, 104 may be in electronic communication with more than one legacy device 106, 108.

The LR devices 102, 104 may be access points (AP) or subscriber stations (STA). An access point may be a base station. A subscriber station may be a mobile station such as a mobile phone and a wireless networking card. For example, LR device A 102 may be an access point and LR device B 104 may be a subscriber station. As another example, LR device A 102 may be a subscriber station and LR device B 104 may also be a subscriber station. As a third example, LR device A 102 may be an access point and LR device B 104 may also be an access point. The legacy devices 106, 108 are devices that are not capable of long range electronic communication 103, and may be access points, subscriber stations, or a combination thereof.

An LR device 102, 104 may communicate with each of the legacy devices 106, 108 that are within range of the LR device 102, 104. For example, LR device A 102 may communicate with legacy device D 106 that is within range of LR device A 102 but may not communicate with legacy device C 108 if legacy device C 108 is outside of the range of LR device A 102.

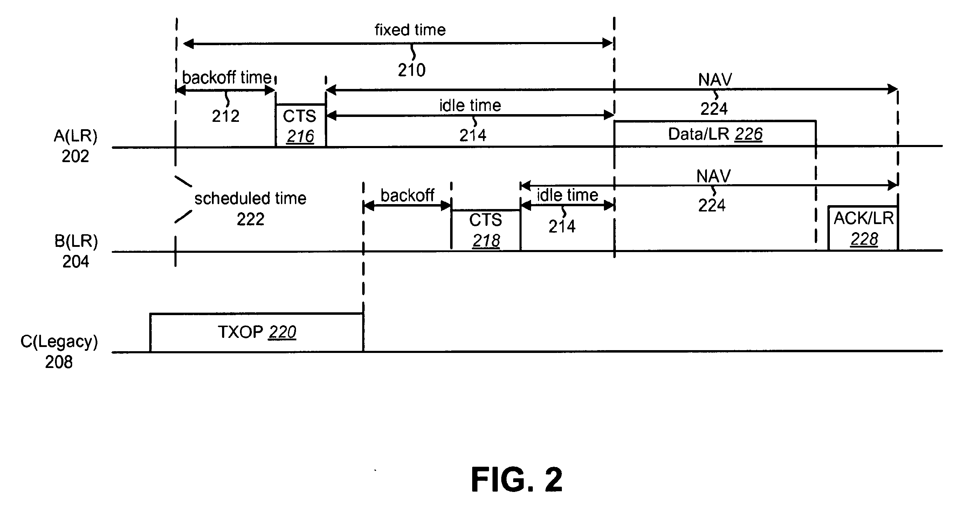

Figure 2 illustrates transmission schemes involving an LR device A(LR) 202, an LR device B(LR) 204, and a legacy device C(legacy) 208. In this system, C(legacy) 208 is only within range of communicating with B(LR) 204. At a scheduled time 222, a fixed time 210 window begins. The scheduled time 222 may be predetermined by either the A(LR) 202, the B(LR) 204, or both. The scheduled time 222 may also be provided to the A(LR) 202 and the B(LR) 204 by another device (not shown), or the scheduled time 222 may be manually set. The scheduled time 222 may indicate the beginning of the fixed time frame 210. The scheduled time 222 may also indicate the length of the fixed time frame 210. For example, both A(LR) 202 and B(LR) 204 may be aware of both the scheduled time 222 and the fixed time 210 length. C(legacy) 208 may not be aware of the scheduled time 222 or the fixed time 210 length.

At the scheduled time 222 there may also be a pending LR data transmission 226. The LR data transmission 226 may occur between two or more LR devices 202, 204. In Figure 2, the LR data transmission 226 is from A(LR) 202 to B(LR) 204. A legacy device 208 may be unaware of the pending LR data transmission 226. As such, C(legacy) 208 may attempt to communicate with B(LR) 202 while the LR data transmission 226 occurs. Alternatively, C(legacy) 208 may attempt to communicate with other devices within the range of B(LR) 204 during the LR data transmission 226. Such attempts to communicate may cause a collision and a possible failure to the LR data transmission 226.

Within the fixed time 210, A(LR) 202 and B(LR) 204 may each send a clear-to-send (CTS) frame 216, 218 that will be received by the legacy devices 208 that are within range of each of the LR devices 202, 204. The CTS frame 216, 218 may be a legacy CTS frame that a legacy device 208 can receive and interpret. The CTS frame 216, 218 may also be a legacy frame. A device may be required to wait a specified backoff time 212 prior to sending a CTS 216, 218. The backoff time 212 may prevent collisions. The backoff time 212 may be a random or a fixed backoff time. The backoff time 212 may be a Distributed Coordination Function Interframe Space (DIFS) or a Point Coordination Function Interframe Space (PIFS). The CTS 216, 218 may define a network allocation vector (NAV) 224 for the legacy device 208 that defines a time frame during which the legacy device 208 may not communicate. The NAV 224 may define the time frame needed to complete both the LR data transmission 226 and a corresponding LR acknowledgment (ACK) 228. Thus, B(LR) 204 may send a CTS frame 218 to C(legacy) 208 to indicate the pending LR data transmission 226.

A legacy device 208 may be in electronic communication when the scheduled time 222 occurs. For example, C(legacy) 208 is participating in a transmission opportunity (TXOP) 220 when the scheduled time 222 occurs. Because C(legacy) 208 is in electronic communication, B(LR) 204 may wait until the TXOP 220 has finished before sending the CTS 218 to avoid a collision with the TXOP 220. However, C(legacy) 208 may not be within range of A(LR) 202. Thus, in Figure 2, A(LR) 202 may send the CTS 216 while C(legacy) 208 is communicating in a TXOP 220 because the CTS 216 from A(LR) 202 does not risk causing a collision with the TXOP 220.

Thus, when the TXOP 220 that C(legacy) 208 is participating in has finished, B(LR) 204 may wait the requisite backoff time 212 and then send the CTS frame 218. As discussed above, the CTS frame 218 may be received by one or more legacy devices 208 that are within range of the LR device 204. Thus, the CTS frame 218 sent from B(LR) 204 may be received by C(legacy) 208 along with other wireless devices within range of B(LR) 204.

Once a CTS frame 216, 218 has been sent, an LR device 202, 204 may idle 214 until the fixed time 210 has expired. Once the fixed time 210 has expired, the LR data transmission 226 may begin. During the LR data transmission 226, an LR device 202, 204 may transmit data to another LR device over an LR signal. The receiving LR device may send an LR ACK 228 upon receiving the completed LR data transmission 226. Thus, in Figure 2, A(LR) 202 sends an LR data transmission 226 to B(LR) 204, and B(LR) 204 sends an LR ACK 228 to A(LR) 202 upon successfully receiving the LR data transmission 226. The LR data transmission 226 and accompanying LR ACK 228 finish during the defined NAV 224 in order to ensure collision avoidance from legacy devices 208.

If one or both of the LR devices 202, 204 fail to complete sending a CTS frame 216, 218 during the fixed time 210, the LR data transmission 226 may fail. For example, if B(LR) 204 fails to complete the sending of the CTS frame 218 to C(legacy) 208 before the expiration of the fixed time 210, A(LR) 202 may begin sending the LR data transmission 226 and C(legacy) 208 may attempt to communicate during the LR data transmission 226, thereby causing a collision. The length of the fixed time 210 may thus be adjusted statically or dynamically to optimally allow A(LR) 202 and B(LR) 204 to complete the transmission of the CTS frames 216, 218 before the expiration of the fixed time 210. The fixed time 210 may also be adjusted to avoid long and wasteful idle times 214, during which no transmissions 226 occur.

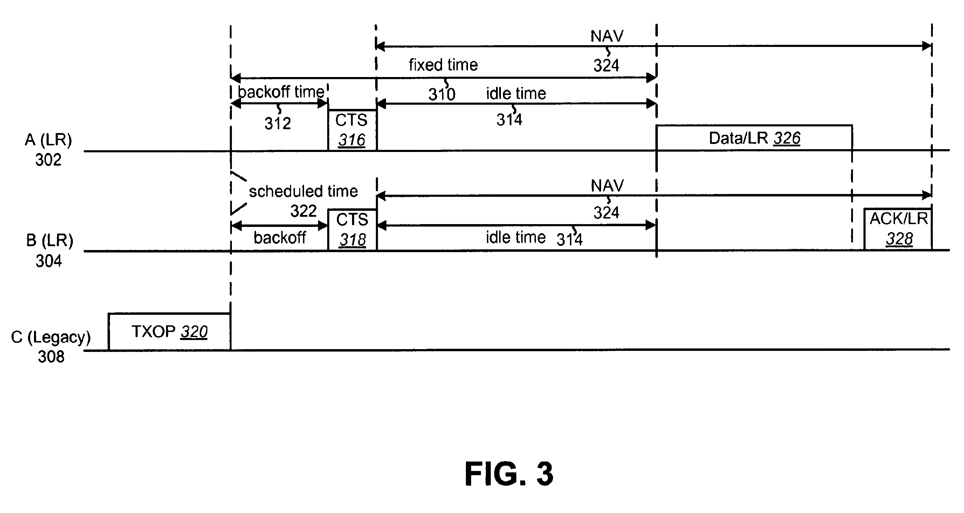

Figure 3 illustrates alternative transmission schemes involving an LR device A(LR) 302, an LR device B(LR) 304, and a legacy device C(legacy) 308. C(legacy) 308 may finish communicating prior to the scheduled time 322. In Figure 3, the TXOP 320 that C(legacy) 308 communicates with during transmission 326 has completed prior to the scheduled time 322 and thus, B(LR) 304 does not need to wait additional time before sending the CTS frame 318 8 during the fixed time 310 window. Thus, A(LR) 302 and B(LR) 304 may simultaneously send the respective CTS frames 316, 318 after the requisite backoff time 312. A(LR) 302 and B(LR) 304 may then idle 314 until the fixed time 310 has expired before A(LR) 302 sends the LR data transmission 326 and B(LR) 304 sends the LR ACK 328. C(legacy) 308 may receive the CTS frame 318 from B(LR) 304 and may set the NAV 324 to refrain from communicating during the LR data transmission 326.

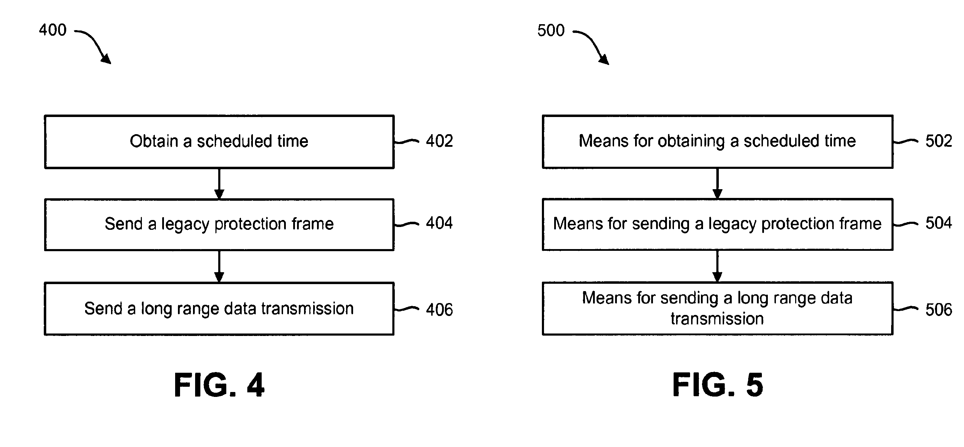

Figure 4 illustrates a flow diagram for a method 400 for a scheduled legacy protection frame for LR devices 202, 204. An LR device 202, 204 may obtain 402 a scheduled time 222 that may correspond to an LR data transmission 226. The LR data transmission 226 may occur at a fixed time 210 after the scheduled time 222. The LR device 202, 204 may send 404 a legacy protection frame to the local legacy devices 208 within the fixed time period 210. The legacy protection frame may define a time period 224 during which the local legacy devices 208 are to refrain from wireless electronic communication. The LR device 202, 204 may then send 406 a LR data transmission 226 to one or more LR devices 202, 204 after the fixed time period 210.

The method 400 of Figure 4 described above may be performed by various hardware and/or software component(s) and/or module(s) corresponding to the means-plus-function blocks 500 illustrated in Figure 5. In other words, blocks 402 through 406 illustrated in Figure 4 correspond to means-plus-function blocks 502 through 506 illustrated in Figure 5.

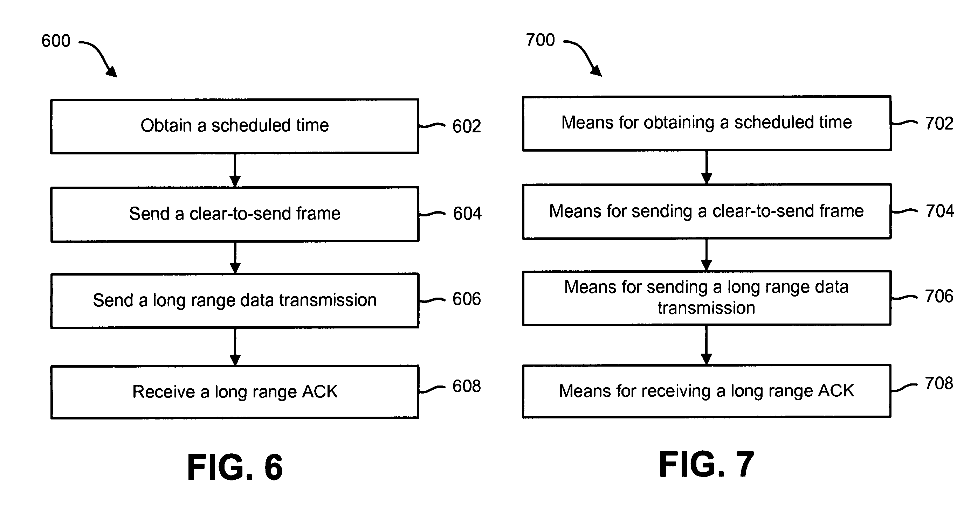

Figure 6 illustrates a flow diagram for an alternative method 600 for a scheduled legacy protection frame for LR devices 202, 204. An LR device 202, 204 may obtain 602 a scheduled time 222 that may correspond to a pending LR data transmission 226. As discussed above in relation to Figure 4, the LR data transmission 226 may occur a fixed time 210 after the scheduled time 222. The LR device 202, 204 may then send 604 a clear-to-send (CTS) frame 216, 218 that is received by the local legacy devices 208. The CTS frame 216, 218 should be sent within the fixed time period 210. The CTS frame 216, 218 may be in a format that can be decoded by the legacy devices 208. The CTS frame 216, 218 may define a time period 224 during which the local legacy devices 208 are to refrain from wireless electronic communication. Once the fixed time period 210 has expired, the LR device 202, 204 may send 606 an LR data transmission 226. Upon completion of the LR data transmission 226, the LR device 202, 204 may receive 608 an LR ACK 228 from the one or more receiving LR devices 202, 204.

The method 600 of Figure 6 described above may be performed by various hardware and/or software component(s) and/or module(s) corresponding to the means-plus-function blocks 700 illustrated in Figure 7. In other words, blocks 602 through 608 illustrated in Figure 6 correspond to means-plus-function blocks 702 through 708 illustrated in Figure 7.

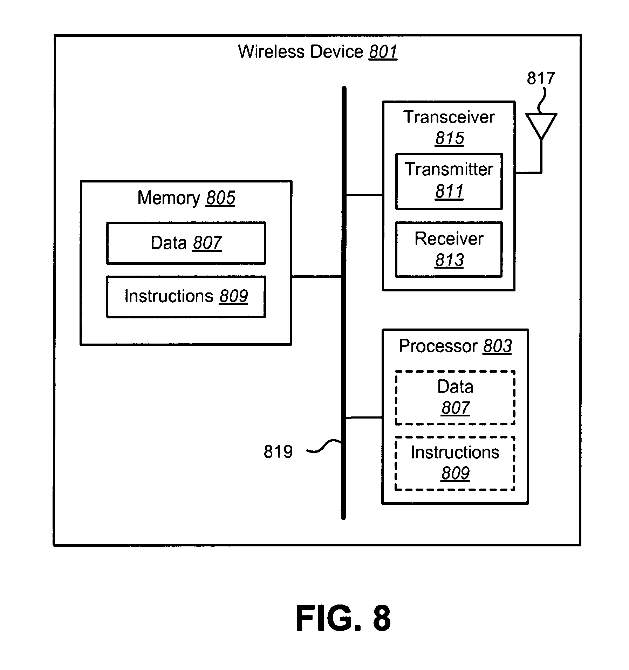

Figure 8 illustrates certain components that may be included within a wireless device 801. The wireless device 801 may be a subscriber station 104 or an access point 102. The wireless device 801 may be a device that is capable of LR data transmission 226.

The wireless device 801 includes a processor 803. The processor 803 may be a general purpose single- or multi-chip microprocessor (e.g., an ARM), a special purpose microprocessor (e.g., a digital signal processor (DSP)), a microcontroller, a programmable gate array, etc. The processor 803 may be referred to as a central processing unit (CPU). Although just a single processor 803 is shown in the wireless device 801 of Figure 8, in an alternative configuration, a combination of processors (e.g., an ARM and DSP) could be used.

The wireless device 801 also includes memory 805. The memory 805 may be any electronic component capable of storing electronic information. The memory 805 may be embodied as random access memory (RAM), read only memory (ROM), magnetic disk storage media, optical storage media, flash memory devices in RAM, on-board memory included with the processor, EPROM memory, EEPROM memory, registers, and so forth, including combinations thereof.

Data 807 and instructions 809 may be stored in the memory 805. The instructions 809 may be executable by the processor 803 to implement the methods disclosed herein. Executing the instructions 809 may involve the use of the data 807 that is stored in the memory 805.

The wireless device 801 may also include a transmitter 811 and a receiver 813 to allow transmission and reception of signals between the wireless device 801 and a remote location. The transmitter 811 and receiver 813 may be collectively referred to as a transceiver 815. An antenna 817 may be electrically coupled to the transceiver 815. The wireless device 801 may also include (not shown) multiple transmitters, multiple receivers, multiple transceivers and/or multiple antenna.

The various components of the wireless device 801 may be coupled together by one or more buses, which may include a power bus, a control signal bus, a status signal bus, a data bus, etc. For the sake of clarity, the various buses are illustrated in Figure 8 as a bus system 819.

The term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

The phrase "based on" does not mean "based only on," unless expressly specified otherwise. In other words, the phrase "based on" describes both "based only on" and "based at least on."

The term "processor" should be interpreted broadly to encompass a general purpose processor, a central processing unit (CPU), a microprocessor, a digital signal processor (DSP), a controller, a microcontroller, a state machine, and so forth. Under some circumstances, a "processor" may refer to an application specific integrated circuit (ASIC), a programmable logic device (PLD), a field programmable gate array (FPGA), etc. The term "processor" may refer to a combination of processing devices, e.g., a combination of a DSP and a microprocessor, a plurality of microprocessors, one or more microprocessors in conjunction with a DSP core, or any other such configuration.

The term "memory" should be interpreted broadly to encompass any electronic component capable of storing electronic information. The term memory may refer to various types of processor-readable media such as random access memory (RAM), read-only memory (ROM), non-volatile random access memory (NVRAM), programmable read-only memory (PROM), erasable programmable read only memory (EPROM), electrically erasable PROM (EEPROM), flash memory, magnetic or optical data storage, registers, etc. Memory is said to be in electronic communication with a processor if the processor can read information from and/or write information to the memory. Memory that is integral to a processor is in electronic communication with the processor.

The terms "instructions" and "code" should be interpreted broadly to include any type of computer-readable statement(s). For example, the terms "instructions" and "code" may refer to one or more programs, routines, sub-routines, functions, procedures, etc. "Instructions" and "code" may comprise a single computer-readable statement or many computer-readable statements.

The functions described herein may be implemented in hardware, software, firmware, or any combination thereof. If implemented in software, the functions may be stored as one or more instructions on a computer-readable medium. The term "computer-readable medium" refers to any available medium that can be accessed by a computer. By way of example, and not limitation, a computer-readable medium may comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray^{®} disc where disks usually reproduce data magnetically, while discs reproduce data optically with lasers.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

The methods disclosed herein comprise one or more steps or actions for achieving the described method. The method steps and/or actions may be interchanged with one another without departing from the scope of the claims. In other words, unless a specific order of steps or actions is required for proper operation of the method that is being described, the order and/or use of specific steps and/or actions may be modified without departing from the scope of the claims.

Further, it should be appreciated that modules and/or other appropriate means for performing the methods and techniques described herein, such as those illustrated by Figures 4 and 6, can be downloaded and/or otherwise obtained by a device. For example, a device may be coupled to a server to facilitate the transfer of means for performing the methods described herein. Alternatively, various methods described herein can be provided via a storage means (e.g., random access memory (RAM), read only memory (ROM), a physical storage medium such as a compact disc (CD) or floppy disk, etc.), such that a device may obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the systems, methods, and apparatus described herein without departing from the scope of the claims.

## Claims

1. A method for informing a nearby device of an upcoming data transmission, the method **characterised by**:
obtaining (402) a scheduled time (222) wherein the scheduled time corresponds to a long range, LR, data transmission (226); and
sending (404) to a nearby device a legacy protection frame within a fixed time period (210) after the scheduled time (222), wherein the legacy protection frame can be decoded by the nearby device, the legacy protection frame configured to define a time period during which the nearby device (208) is to refrain from wireless communication.

2. The method of claim 1, wherein the LR data transmission is a pending LR data transmission (226).

3. The method of claim 1 or 2, wherein the legacy protection frame comprises a clear-to-send, CTS frame (216, 218).

4. The method of claim 2, further comprising sending a long range, LR, data transmission after the fixed time period (210) or receiving a long range, LR, data transmission after the fixed time period (210).

5. The method of any previous claim, wherein the legacy protection frame is sent after a backoff period (212).

6. The method of claim 5, wherein the backoff period (212) is fixed.

7. The method of any previous claim, wherein the obtaining and the sending are performed by an access point, AP or a subscriber station, STA.

8. The method of claim 7, wherein the AP or the STA comprises an 802.11n device.

9. The method of any previous claim, wherein the nearby device is a legacy device which is not an 802.11n device.

10. The method of any previous claim, wherein the legacy protection frame sets a network allocation vector, NAV.

11. The method of claim 2, wherein the CTS frame sets a network allocation vector NAV.

12. The method of any previous claim, wherein the legacy protection frame causes the nearby device not to transmit for a period of time.

13. The method of claim 11, wherein the NAV is longer than the fixed time period.

14. The method of any previous claim, wherein the fixed time period is longer than the time needed to transmit the legacy protection frame.

15. The method of any previous claim, wherein the method is executed by a pair of devices (102, 104).

16. A wireless device configured to inform a nearby device of an upcoming long range, LR, data transmission, comprising:
a processor; and
circuitry coupled to said processor configured to:
implement the method according to any of Claims 1 to 15.

17. An apparatus configured to inform a nearby device of an upcoming long range, LR, data transmission, **characterized by**:
means for obtaining a scheduled time (222) wherein the scheduled time corresponds to a long range, LR, data transmission (226); and
means for sending to the nearby device a legacy protection frame within a fixed time period (210) after the scheduled time, wherein the legacy protection frame can be decoded by the nearby device, the legacy protection frame configured to define a time period during which the nearby device (208) is to refrain from wireless electronic communication.

18. A computer-program product for informing a nearby device of an upcoming long range, LR, data transmission, the computer-program product comprising a computer-readable medium having instructions thereon, the instructions comprising code configured to implement the method according to any of Claims 1 to 15.

## Patentansprüche

1. Ein Verfahren zum Informieren einer nahegelegenen Einrichtung über eine anstehende Datensendung, wobei das Verfahren **gekennzeichnet ist durch**:
Erlangen (402) einer eingeteilten Zeit (222), wobei die eingeteilte Zeit einer Datensendung mit großer Reichweite bzw. LR-Datensendung (LR = long range) (226) entspricht; und
Senden (404) eines Altsystem- bzw. Legacy-Schutzrahmens innerhalb einer festgelegten Zeitperiode (210) nach der eingeteilten Zeit (222) an eine nahegelegene Einrichtung, wobei der Altsystemschutzrahmen von der nahegelegenen Einrichtung decodiert werden kann, wobei der Altsystemschutzrahmen konfiguriert ist, um eine Zeitperiode zu definieren, für die die nahegelegene Einrichtung (208) eine Drahtloskommunikation unterlassen soll.

2. Verfahren nach Anspruch 1, wobei die LR-Datensendung eine wartende bzw. ausstehende LR-Datensendung (226) ist.

3. Verfahren nach Anspruch 1 oder 2, wobei der Altsystemschutzrahmen einen Zur-Sendung-Freigegeben- bzw. CTS-Rahmen (CTS = clear-to-send) (216, 218) aufweist.

4. Verfahren nach Anspruch 2, das weiter das Senden einer LR-Datensendung nach der festgelegten Zeitdauer (210) oder das Empfangen einer LR-Datensendung nach der festgelegten Zeitdauer (210) aufweist.

5. Verfahren nach einem der vorhergehenden Ansprüche, wobei der Altsystemschutzrahmen nach einer Backoff- bzw. Warteperiode (212) gesendet wird.

6. Verfahren nach Anspruch 5, wobei die Backoff-Periode (212) festgelegt ist.

7. Verfahren nach einem der vorhergehenden Ansprüche, wobei das Erlangen und Senden von einem Zugriffspunkt bzw. AP (AP = access point) oder einer Teilnehmerstation bzw. STA (STA = subscriber station) durchgeführt werden.

8. Verfahren nach Anspruch 7, wobei der AP oder die STA eine 802.11n-Einrichtung aufweist.

9. Verfahren nach einem der vorhergehenden Ansprüche, wobei die nahegelegene Einrichtung eine Altsystemvorrichtung ist, die keine 802.11 n-Einrichtung ist.

10. Verfahren nach einem der vorhergehenden Ansprüche, wobei der Altsystemschutzrahmen einen Netzwerkzuteilungsvektor bzw. NAV (NAV = network allocation vector) bestimmt.

11. Verfahren nach Anspruch 2, wobei der CTS-Rahmen einen Netzwerkzuteilungsvektor bzw. NAV bestimmt.

12. Verfahren nach einem der vorhergehenden Ansprüche, wobei der Altsystemschutzrahmen bewirkt, dass die nahegelegene Einrichtung für eine Zeitperiode nicht sendet.

13. Verfahren nach Anspruch 11, wobei der NAV länger ist als die festgelegte Zeitperiode.

14. Verfahren nach einem der vorhergehenden Ansprüche, wobei die festgelegte Zeitperiode länger als die Zeit ist, die benötigt wird, um den Altsystemschutzrahmen zu senden.

15. Verfahren nach einem der vorhergehenden Ansprüche, wobei das Verfahren von einem Paar von Einrichtungen (102, 104) ausgeführt wird.

16. Ein Drahtloseinrichtung, die konfiguriert ist, um eine nahegelegene Einrichtung über eine anstehende Datensendung mit großer Reichweite bzw. LR-Datensendung zu informieren, wobei die Einrichtung Folgendes aufweist:
einen Prozessor; und
einen Schaltkreis, der an den Prozessor gekoppelt ist und konfiguriert ist zum Implementieren des Verfahrens nach einem der Ansprüche 1 bis 15.

17. Eine Vorrichtung, die konfiguriert ist, um eine nahegelegene Einrichtung über eine anstehende Datensendung mit großer Reichweite bzw. LR-Datensendung zu informieren, die durch Folgendes gekennzeichnet ist:
Mittel zum Erlangen einer eingeteilten Zeit (222), wobei die eingeteilte Zeit einer LR-Datensendung (226) entspricht; und
Mittel zum Senden eines Altsystemschutzrahmens innerhalb einer vorbestimmten Zeitperiode (210) nach der eingeteilten Zeit an die nahegelegene Einrichtung, wobei der Altsystemschutzrahmen durch die nahegelegene Einrichtung decodiert werden kann, wobei der Altsystemschutzrahmen konfiguriert ist, um eine Zeitperiode zu definieren, während der die nahegelegene Einrichtung (208) eine drahtlose elektronische Kommunikation unterlassen soll.

18. Ein Computerprogrammprodukt zum Informieren einer nahegelegenen Vorrichtung über eine anstehende Datensendung mit großer Reichweite bzw. LR-Datensendung, wobei das Computerprogrammprodukt ein computerlesbares Medium mit Instruktionen darauf aufweist, wobei die Instruktionen Code aufweisen, der konfiguriert ist, um das Verfahren nach einem der Ansprüche 1 bis 15 zu implementieren.

## Revendications

1. Procédé pour informer un dispositif proche d'une transmission de données imminente, le procédé étant **caractérisé par** les étapes suivantes :
obtenir (402) un temps planifié (222), le temps planifié correspondant à une transmission de données à longue distance, LR, (226) ; et
envoyer (404) à un dispositif proche une trame de protection d'un ancien système dans une période temporelle fixe (210) après le temps planifié (222), la trame de protection d'un ancien système pouvant être décodée par le dispositif proche, la trame de protection d'un ancien système étant agencée pour définir une période temporelle pendant laquelle le dispositif proche (208) doit s'abstenir de communications sans fil.

2. Procédé selon la revendication 1, dans lequel la transmission de données LR est une transmission de données LR (226) en attente.

3. Procédé selon la revendication 1 ou 2, dans lequel la trame de protection d'un ancien système comprend une trame libre-pour-envoyer, CTS (216, 218).

4. Procédé selon la revendication 2, comprenant en outre l'envoi d'une transmission de données à longue distance, LR, après la période temporelle fixe (210) ou la réception d'une transmission de données à longue distance, LR, après la période temporelle fixe (210).

5. Procédé selon l'une quelconque des revendications précédentes, dans lequel la trame de protection d'un ancien système est envoyée après une période de retrait (212).

6. Procédé selon la revendication 5, dans lequel la période de retrait (212) est fixe.

7. Procédé selon l'une quelconque des revendications précédentes, dans lequel l'obtention et l'envoi sont réalisés par un point d'accès, AP, ou par un poste d'abonné, STA.

8. Procédé selon la revendication 7, dans lequel l'AP ou le STA comprend un dispositif 802.11n.

9. Procédé selon l'une quelconque des revendications précédentes, dans lequel le dispositif proche est un dispositif d'un ancien système qui n'est pas un dispositif 802.11n.

10. Procédé selon l'une quelconque des revendications précédentes, dans lequel la trame de protection d'un ancien système établit un vecteur d'attribution de réseau, NAV.

11. Procédé selon la revendication 2, dans lequel la trame CTS établit un vecteur d'attribution de réseau NAV.

12. Procédé selon l'une quelconque des revendications précédentes, dans lequel la trame de protection d'un ancien système amène le dispositif proche à ne pas émettre pendant une certaine période temporelle.

13. Procédé selon la revendication 11, dans lequel le NAV est plus long que la période temporelle fixe.

14. Procédé selon l'une quelconque des revendications précédentes, dans lequel la période temporelle fixe est plus longue que le temps nécessaire pour transmettre la trame de protection d'un ancien système.

15. Procédé selon l'une quelconque des revendications précédentes, dans lequel le procédé est exécuté par une paire de dispositifs (102, 104).

16. Dispositif sans fil agencé pour informer un dispositif proche d'une transmission de données à longue distance, LR, imminente, comprenant :
un processeur ; et
une circuiterie couplée au processeur et agencée pour :
mettre en oeuvre le procédé selon l'une quelconque des revendications 1 à 15.

17. Dispositif agencé pour informer un dispositif proche d'une transmission de données à longue distance, LR, imminente, **caractérisé par** :
des moyens pour obtenir un temps planifié (222), le temps planifié correspondant à une transmission de données à longue distance, LR, (206) ; et
des moyens pour envoyer au dispositif proche une trame de protection d'un ancien système dans une période temporelle fixe (210) après le temps planifié, la trame de protection d'un ancien système pouvant être décodée par le dispositif proche, la trame de protection d'un ancien système étant agencée pour définir une période temporelle pendant laquelle le dispositif proche (208) doit s'abstenir de communications électroniques sans fil.

18. Produit programme d'ordinateur pour informer un dispositif proche d'une transmission de données à longue distance, LR, imminente, le produit programme d'ordinateur comprenant un support lisible par un ordinateur comportant des instructions sur lui, les instructions comprenant du code agencé pour mettre en oeuvre le procédé selon l'une quelconque des revendications 1 à 15.
